# EUROPEAN PATENT APPLICATION

(11) **EP 2 933 385 A2**
(43) Date of publication of application: **21.10.2015**
(21) Application number: 15157018.1
(22) Date of filing: 27.02.2015
(51) Int. Cl.: E02F 9/16, E02F 9/20

(54) **A VEHICLE WITH A ROTATABLE SEAT**

(30) Priority: 14.04.2014 GB 201406677
(71) Applicant: JC Bamford Excavators Ltd, Rocester Uttoxeter Staffordshire ST14 5JP (GB)
(72) Inventor: McKee, Michael, Uttoxeter, Staffordshire ST14 5JP (GB)
(74) Representative: Jones, John Bryn

(57) **Abstract**

A vehicle having a plurality of operator controls (32, 33, 34, 35, 36), an operator seat (31) moveable between a first (41) and second (42) position, securing means (40) for releasably securing the seat (31) in the first position (41), and a single operator actuated means (50) operable to both
selectively disable one or some of the operator controls (32, 33, 34, 35, 36) and
selectively release the securing means (40) to allow the seat (31) to move away from the first position (41),
the single operator actuated means (50) being the sole means for selectably releasing the securing means (40).

## Description

The present invention relates to a vehicle, in particular a working vehicle.

Known working vehicles, such as back hoe loaders have a materials handling implement such as a loading shovel mounted on the front of the machine and a further materials handling implement such as a back hoe, mounted on the back of a machine.

When the operator wishes to use the loading shovel the seat is orientated in a forwards facing direction and the operator can use controls such as the steering wheel, a foot brake, a foot clutch, a foot accelerator, a gear box having forward and reverse gears, and hand operated controls to lift and lower a loading arm and crowd or dump the loading shovel in order to manoeuvre material.

When it is necessary to move the back hoe loader from one location to another location, typically via public highway, the loading shovel will be lifted above ground level and the back hoe loader can be driven, in the manner of a car (automobile) with the operator facing forwards and using the steering wheel, brake, clutch and throttle controls.

When using the back hoe the seat can be rotated to face rearwardly. When using the back hoe the vehicle will be stationary, and indeed some or all of the wheels may be lifted off the ground by operation of stabiliser legs and/or lowering of the front shovel into engagement with the ground. When operating the back hoe various hydraulic rams will be needed to operated which are supplied by pressurised hydraulic fluid from a pump driven by the engine. The power required to drive the pump may require the engine to be set at an engine speed above a normal idle speed. In order to set the engine speed above a normal idle speed a hand throttle is provided which is located in a convenient position for operation by the operator when the seat is facing rearwardly.

The seat can be releasably locked in a forwards facing position and can be locked in the rearward facing position. In order to release the lock so the seat can be turned between the forwards and rearward positions an operator actuated seat lock release is provided. In known vehicles the seat lock release is actuated by the operators foot. Once the seat lock release has been actuated by the operator's foot, the operator can then turn the seat. A seat position sensor is provided and once it has been determined that the seat has turned away from the forward facing position a signal from the seat sensor is conveyed to a control system which then disables certain operator controls. In particular it disables operator controls which are themselves mounted on the seat, and hence turn with the seat as it is rotated from the forward facing position to the rearward facing position. By disabling certain controls as the seat is being turned, should those controls inadvertently be knocked or caught on a piece of operator clothing, then they will not operate any part of the machine in an unexpected or an uncontrolled manner and this therefore is a safe method of turning the seat.

Such known vehicles also have an operator hand actuated control disabling device which disables certain controls which operate the front loading arm or the like. Thus, when the operator is in the vehicle with the seat facing forwards the operator may be tasked with using the front loading arm and front shovel to move the material. When the operator takes a break from moving the material, he or she may nevertheless remain in the cab with the vehicle engine running and under these circumstances the operator can use the control disabling device to disable the front loading arm and shovel. Advantageously this allows the operator to concentrate on another task unrelated to moving of material, such as making a phone call and it means that should the operator inadvertently knock the arm control or implement control, then the implement will not move unexpectedly or uncontrollably. Once the operator's attention is redirected towards operating the arm and loading shovel then these controls can be re-enabled.

Thus, prior art machines have an operator hand actuated control disabling device which typically the operator will actuate if he or she required certain controls to be disabled and a foot operated seat lock release which the operator will use if it becomes necessary to turn the seat either to the rear facing position, or to a position facing a door of the vehicle so that exit of the vehicle is simplified. Whilst the seat position sensor acts to disable certain controls, this is not immediately apparent to the operator.

An object of the present invention is to provide an improved vehicle.

Thus, according to the present invention there is provided a vehicle having a plurality of operator controls, an operator seat moveable between a first and second position, securing means for releasably securing the seat in the first position, and a single operator actuated means operable to both
selectively disable one or some of the operator controls and
selectively release the securing means to allow the seat to move away from the first position,
the single operator actuated means being the sole means for selectively releasing the securing means.

Advantageously, because there is a single operator actuated means, this single operator actuated means fulfils the function of the hand operated control disabling device and also the function of the foot operated seat lock release device of the prior art. Furthermore, if the operator wishes to disable certain controls then he or she will use the single operator actuated means. Equally if the operator wishes to release the seat release then he or she will again use the single operator actuated means. The operator will become used to using the single operator actuated means under both circumstances. Because the operator will become used to using one device then in an emergency situation the operator will more readily and more quickly operate the single operator actuated means so as to disable movement of certain parts of the vehicle. For example, if the front loading arm is moving downwards because an article of clothing or the like has caught on the arm moving control, the operator can instantly and automatically operate the single operator actuated means to stop movement of the arm. Thus, not only does the present invention provide for a vehicle having fewer operator actuated controls than the prior art, because there are fewer controls they are used more often, and hence the vehicle becomes safer since the operators instant reaction is more likely to operate the single operator actuated means.

The invention will now be described, by way of example only, with reference to the accompanying drawings in which:-
Figure 1 is a side view of a vehicle according to the present invention,
Figure 2 is a side view of the vehicle of figure 1 with the operator seat facing rearwardly, and
Figure 3 shows a plan schematic view of the vehicle of figure 1 and 2 showing various directions in which the seat can face.

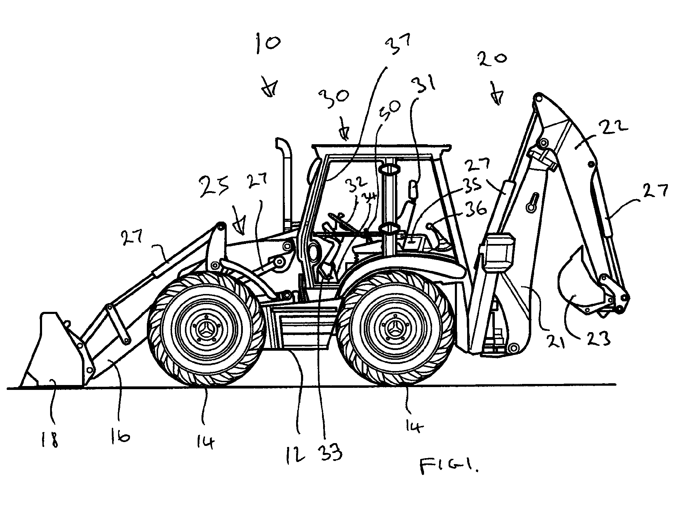

With reference to figure 1 there is shown a material handling vehicle in the form of a back hoe loader 10 having a chassis 12 supported by ground engaging motive means in the form of wheels 14. Mounted on the chassis is a loading arm 16 at the front of which is mounted an implement, in this case a loading shovel 18. The loading arm and loading shovel are mounted on the front of the vehicle.

Mounted on the back of the vehicle is a back hoe 20 having a boom 21, a dipper arm 22, and a bucket 23. The vehicles includes an engine 25 which provides power to drive the vehicle over the ground. The engine 25 also provides power to operate a hydraulic pump which can selectively provide pressurised hydraulic fluid to the various rams 27 of the vehicle to operate the loading arm, loading shovel, boom, dipper, bucket etc so as to enable material to be handled. The vehicles includes an operator cab 30 including an operator seat 31. The operator cab includes operator controls such as a steering wheel 32, a foot brake 33, a foot throttle 34, a hand throttle 35 and back hoe control lever 36.

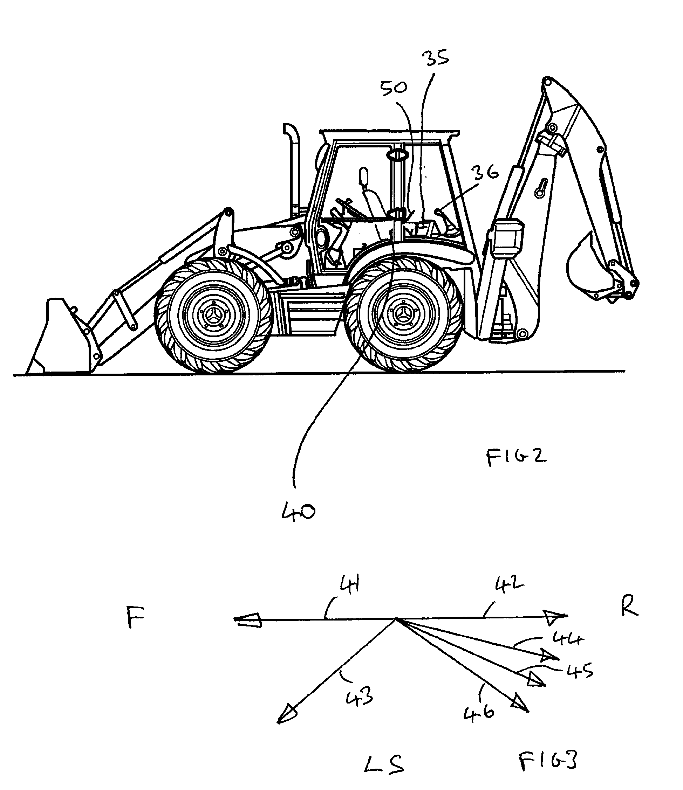

As shown in figure 1 the operator seat 31 is facing forwards. The operator seat is rotatable and can be rotated to the position shown in figure 2 where it faces the rear of the vehicle. The vehicle includes a seat position lock 40 which can lock the seat in the forwards facing position as shown in figure 1 or can lock the seat in the rearward facing position as shown in figure 2. When being moved from the figure 1 position to the figure 2 position the seat rotates anticlockwise when viewed from above. The seat position lock may be able to lock the seat in an intermediate position of the seat between the forward facing position shown in figure 1 and the rear facing position shown in figure 2.

The vehicle includes a cab door 37 on the left hand side of the vehicle. Thus, starting with the operator in the cab with the seat positioned as shown in figure 1, if the operator wishes to exit the cab then the seat may be turned towards the operators left (i.e. anticlockwise when viewed from above) so that the seat faces the door (i.e. the seat is partially facing forwards and partially facing to the left of the vehicle). In this position it is easy for the operator to exit the cab through the door. Alternatively, starting with the seat in the position as shown in figure 1, if the operator wishes to operate the back hoe, then the seat can be rotated through 180° to the position shown in figure 2.

Under some circumstances the back hoe may be predominantly operated on the left hand side of the vehicle (when considering the forwards direction of the vehicle) i.e. on the right hand side of the operator when the seat is in the figure 2 position. Under these circumstances, it is convenient for the seat to be turned slightly clockwise (when viewed from above) from the figure 2 position to a position where the seat faces partially towards the rear of the vehicle and partially towards the left side of the vehicle.

Figure 3 shows a schematic plan view of the back hoe loader 10. F indicates the front of the back hoe loader and R represents the back of the back hoe loader. LS represents the left side of the back hoe loader. Arrows 41, 42, 43, 44, 45 and 46 represent the direction in which the seat can be positioned to face.

Thus, arrow 41 represents the seat facing a forwards direction as shown in figure 1. Arrow 42 represents the seat facing a rearward direction as shown in figure 2. Arrow 43 represents the seat facing partially forwards and partially towards the left hand side. This is the position at which the seat will typically be facing when the operator exits the cab through the door 37. Arrows 44, 45 and 46 show the direction in which the seat may be facing when the operator is using the back hoe primarily when the back hoe is positioned on the left hand side of the vehicle. Arrows 44, 45 and 46 represent the seat facing partially backwards and partially towards the left hand side.

The seat lock may lock the seat in positions 41, 42, 44, 45, or 46.

The back hoe loader has certain operating modes.

Thus, the vehicle has a static operating mode. In this mode the operator seat faces forwards as shown in figure 1. The engine is decoupled from the ground engaging motive means, e.g. a gear box may be in neutral such that the engine does not drive the wheels 14. The foot throttle is enabled, e.g. if the operator presses on the foot throttle the engine speed increases. The hand throttle is enableable. Thus, in the static operating mode the hand throttle may be enabled or alternatively it may be disabled. In the static operating mode when the hand throttle is enabled, operating the hand throttle will increase the engine speed. However, in the static operating mode when the hand throttle is not enabled (i.e. it is disabled), operating hand throttle will not change the engine speed.

The vehicle also has a transport mode. In the transport mode the operator faces forwards. The engine is coupled to the ground engaging motive means, for example the gear box will be in gear and the engine will be turning the wheels 14 either in a forwards direction or a reverse direction. The foot throttle is enabled. The hand throttle may be disabled.

The vehicle also has an excavation mode. In the excavation mode the operator seat faces rearwards as shown in figure 2. The engine is decoupled from the ground engaging motive means, e.g. the gear box is in neutral. The hand throttle is enabled, e.g. operating the hand throttle will increase the engine speed. The foot throttle may be enabled or alternatively the foot throttle may be disabled.

Advantageously, because in the static operating mode the hand throttle is enableable in some circumstances hand throttle can be enabled, such as when an external service such as a water pump or other external machine tool is being used and the hand throttle can set the engine speed to a suitable level required to drive the water pump or other external machine tool. However, when in the static mode and the hand throttle is not enabled, if the foot throttle has not been applied, then the engine will automatically return to an idle speed thereby saving fuel.

Advantageously, when in the excavation mode the hand throttle is enabled thereby raising the engine speed to a working speed above an idle speed if the hand throttle has been set to a level above idle speed. Such an arrangement is convenient for the operator when carrying out repeated operations with the back hoe on a site.

The vehicle includes an operator actuated means 50. In this case the operator actuated means 50 is mounted to turn with the seat. By mounting the operator actuated means 50 to turn with the seat it is always readily operable by the operator in whichever position the seat is facing. In particular the operator actuated means 50 is operated by the operator's hand, i.e. it is positioned so it can be readily reached by the operator's hand.

The operator actuated means may be a button, switch or the like. When the operator operates the operator actuated means two functions are performed. Firstly, the seat lock 40 is released. Secondly, one or more of the operator controls is/are disabled.

In one embodiment the vehicle may have an "electric over hydraulic" system for operating various controls. Thus, a control unit (not shown) may receive instructions (in the form of electrical signals) from operator controls and the control unit will then implement those instructions, for example by operating solenoid operated valves and the like in order to provide pressurised fluid to the various rams 27 so as to be able to handle material. In particular the seat lock 40 may be solenoid operated.

The operator actuated means 50 is the sole means for selectively releasing the seat lock 40.

Consider various scenarios:-
1) With the seat facing forwards as shown in figure 1, should the operator wish to exit the vehicle then he or she will operate the operator actuated means 50 and this releases the seat lock to allow the seat to be turned but also disables certain controls which operate the loading arm 16, implement 18, boom 21, dipper arm 22, bucket 23. Thus, as the seat is turned by the operator, should the operator's clothing or the like catch on a particular control, then no unexpected or uncontrolled movement of a part of the machine will occur.
2) With the seat facing forwards as shown in figure 1, should the operator wish to make a phone call or the like, then he or she can operate the operator actuated means 50. This will result in the seat lock 40 releasing and certain controls being disabled. Thus, should the operator inadvertently knock a control whilst his attention is on making the phone call, no uncontrollable or unexpected movement of parts of the machine will occur. Under these circumstances whilst the seat can be rotated, it is unlikely that the seat will be rotated by the operator. In order to re-enable operation of the controls, the operator may re-actuate the operator actuated means 50. Alternatively, the operator may move the seat partially away from the forwards facing position and then return the seat to the forwards facing position. The act of returning the seat to the forwards facing position may re-enable the disabled controls.
3) If the machine is being operated with a seat facing forwards as shown in figure 1 and the operator notices a dangerous situation starting to occur, then the operator can simply operate the operator actuated means 50. This will for example disable lowering of the loading arm 16 and disable movement of the loading shovel 18, thereby halting the loading arm and implement in their instant position.
4) Three similar scenarios exist with the seat facing rearwardly as shown in figure 2, i.e. with the seat facing rearwardly as shown in figure 2, the operator may wish to exit the vehicle, or the operator may wish to make a phone call or the like, or the operator may spot a dangerous situation arising with the back hoe. Under all these three scenarios, the operator can operate the operator actuated means 50.
5) Similarly with the seat positioned and locked in the direction of arrows 44 or arrow 45 or arrow 46 the same three scenarios listed above require the operator to actuate the operator actuated means 50.

The operator actuated means 50 is the sole means of releasing the seat lock 40. Furthermore, the operator actuated means 50 is the only operator actuated means on the vehicle which both releases the seat lock and disables one or more of the operator controls. Thus, whilst turning the engine off disables certain controls in as much as once the engine is turned off then the hydraulic pump cannot operate and if the hydraulic pump cannot operate then it is no longer possible to lift the loading arm 60, or lift the boom 21, or lift the dipper arm 22. Nevertheless, by turning the engine off this does not release the seat lock. The seat lock 40 can only be released by operating the operator actuated means 50.

Operator controls which may be disabled by the operator actuating the operator actuated means 50 include one or more of:
a front loader arm lift control
a front loader arm lower control
an implement crowd and/or or dump control, the implement being mounted on a front loader arm,
an implement operating control, the implement being mounted on a front loader arm,
a front mounted blade lift control
a front mounted blade lower control
a control to disable gear selection
a foot operated throttle control
a hand operated throttle control.
a rear mounted boom lift control,
a rear mounted boom lower control,
a dipper arm lift and/or lower control, the dipper being mounted on a rear mounted boom,
an implement crowd and/or dump control, the implement being mounted on a dipper arm,
a rear mounted boom carriage traverse control,
a lift and/or lower control for one or more rear stabilisers,
a rear working light control.

As described above, the operator actuated means 50 is mounted such that as the seat turns then the operator actuated means 50 turns with the seat. In further embodiments the vehicle may include a body and a single operator actuated means may be mounted on the body. As described above, the operator actuated means 50 is hand operated. In further embodiments a single operator actuated means may be foot operated. In particular a single operator actuated means which is foot operated may be mounted so as to turn with a seat, or may be mounted on a body of the vehicle.

As described above, the operator actuated means 50 may be a switch or button or the like which provides a signal to a control unit which in turn, releases seat lock 40 and disables certain operator controls. In further embodiments the single operator actuated means may be a lever or the like which is mechanically connected such that a seat lock is released and such that certain controls are disabled.

As described above, there are various ways of enabling one or some of the operator controls once they have been selectively disabled. The machine may be provided with an operator actuated device, such as a button, switch or lever or the like which is operable to selectively enable one or some of the operator controls previously disabled. The operator actuated device may additionally actuate securing means to secure the seat in a particular position. Alternatively, the vehicle may include a first operator actuated device, such as a switch, button, lever or the like and a second operator actuated device such as a switch, button, lever or the like. In order to enable one or more of the operator controls previously disabled then the operator may need to actuate both the first and second operator actuator devices. When the vehicle includes a first and second operator actuated device then one or other of those operator actuated devices may additionally actuate the securing means to secure the seat in a particular position.

## Claims

1. A vehicle having a plurality of operator controls, an operator seat moveable between a first and second position, securing means for releasably securing the seat in the first position, and a single operator actuated means operable to both
selectively disable one or some of the operator controls and
selectively release the securing means to allow the seat to move away from the first position,
the single operator actuated means being the sole means for selectively releasing the securing means.

2. A vehicle as defined in claim 1 wherein the securing means are operable to selectively enable one or some of said operator controls upon movement of the seat to the first position.

3. A vehicle as defined in claim 1 or 2 wherein the seat is rotatable between the first and second positions.

4. A vehicle as defined in any preceding claim wherein the first position is a forwards facing position and/or wherein the second position is a rearward facing position.

5. A vehicle as defined in any preceding claim wherein the securing means are operable to releasably secure the seat in the second position, preferably wherein the securing means are operable to selectively enable one or some of the operator controls upon movement of the seat to the second position, preferably wherein said single operator actuated means is operable to both selectively disable one or some of the operator controls and selectively release the securing means to allow the seats to move away from the second position.

6. A vehicle as defined in any preceding claim wherein the securing means are operable to releasably secure the seat in the third position, preferably the securing means are operable to selectively enable one or some of the operator controls upon movement of the seat to the third position, preferably said single operator actuated means is operable to both selectively disable one or some of the operator controls and selectively release the securing means to allow the seats to move away from the third position.

7. A vehicle as defined in claim 6 wherein the third position is a partially sideways facing position.

8. A vehicle as defined in any preceding claim wherein the plurality for operator controls includes one or more of:
a front loader arm lift control
a front loader arm lower control
an implement crowd and/or dump control, said implement being mounted on a front loader arm,
an implement operating control, said implement being mounted on a front loader arm,
a front mounted blade lift control
a front mounted blade lower control
a control to disable gear selection
a foot operated throttle control
a hand operated throttle control.

9. A vehicle as defined in any of claims 1 to 7 wherein the plurality of operator controls includes one or more of:
a rear mounted boom lift control,
a rear mounted boom lower control,
a dipper arm lift and/or lower control, said dipper being mounted on a rear mounted boom,
an implement crowd and/or dump control, said implement being mounted on a dipper arm,
a rear mounted boom carriage traverse control,
a lift and/or lower control for one or more rear stabilisers,
a control to disable the gear selection,
a foot operated throttle control,
a hand operated throttle control,
a rear working light control.

10. The vehicle as defined in any preceding claim wherein the single operator actuated means is a hand operated actuator means, preferably wherein the single operator actuated means is mounted to move with the seat or wherein the vehicle includes a body and the single operator actuated means is mounted on the body.

11. A vehicle as defined in any one of claims 1 to 9 wherein the single operator actuator means is foot operated, preferably wherein the single operator actuator means is mounted to move with the seat, or wherein the vehicle includes a body and the single operator actuated means is mounted on the body.

12. A vehicle as defined in claim 1 including an operator actuated device operable to selectively enable said one or some of the operator controls, preferably wherein the operator actuated device actuates said securing means to secure the seat in the first position.

13. A vehicle as defined in claim 1 including a first operator actuated device and a second operator actuated device, actuation of the first and second operator actuated devices being required to selectively enable said one or some of the operator controls, preferably wherein the first and/or the second operator actuated device actuates said securing means to secure the seat in the first position.
